# EUROPÄISCHE PATENTSCHRIFT

(11) **EP 3 020 264 B1**
(45) Veröffentlichungstag und Bekanntmachung des Hinweises auf die Patenterteilung: **21.02.2018**
(21) Anmeldenummer: 15401117.5
(22) Anmeldetag: 11.11.2015
(51) Int. Cl.: A01C 15/00, A01C 19/00

(54) **STREUGERÄT**
SPREADER
EPANDEUR

(30) Priorität: 17.11.2014 DE 102014116738
(43) Veröffentlichungstag der Anmeldung: 18.05.2016
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Kleine-Hartlage, Hubertus, 49186 Bad Iburg (DE); Walter, Achim, 49078 Osnabrück (DE); Schiemenz, Friedhelm, 49205 Hasbergen (DE)

(56) Entgegenhaltungen:
- EP-A1- 1 129 608
- EP-A1- 1 704 765
- EP-A1- 2 742 788

## Beschreibung

Die Erfindung betrifft ein Streugerät gemäß des Oberbegriffs des Patentanspruches 1.

Ein derartiges Streugerät ist in der EP 2 742 788 A1 beschrieben. Dieser Streuer weist eine Rührvorrichtung, die sich vorzugsweise oberhalb einer Dosiereinrichtung befindet auf. Die Rührvorrichtung weist ein Rührorgan auf, welches mit einer Antriebsvorrichtung über ein biegesteifes, drehelastisches und/oder als Torsionsfeder ausgebildetes Verbindungselement mit dem Rührorgan verbunden ist. Das Verbindungselement ragt in den Vorratsbehälter hinein und an dessen freien Ende ist das Rührorgan unmittelbar angeordnet. Hier besteht das biegesteife, drehelastische und als Torsionsfeder ausgebildete Verbindungselement aus mehreren langgestreckten Blattfedern, die ein Federpaket bilden. Das Blattfederpaket ist in einem drehbar gelagerten Hohlrohr angeordnet. Die Ausgestaltung ist sehr aufwändig.
Der Erfindung liegt die Aufgabe zu Grunde, einen einfacher ausgestalteten Überlastschutz zu schaffen.

Die Aufgabe wird erfindungsgemäß dadurch gelöst, dass das Verbindungselement als mit zumindest einem über zumindest mehr als über ihre halbe Länge verlaufenden Schlitz in dessen Wandung versehene Hohlwelle ausgebildet und unmittelbar mittels Lagerelementen drehbar an einer Wand des Vorratsbehälters angeordnet ist.
Infolge dieser Maßnahme bildet die Hohlwelle gleichzeitig das drehelastische Verbindungselement und/oder die Torsionsfeder wie auch das drehbar in den Lagerelementen gelagerte Kraftübertragungselement. Hierdurch ergibt sich eine sehr einfache Ausgestaltung des Verbindungselementes zwischen der Antriebsvorrichtung und dem Rührorgan.
Eine besonders vorteilhafte und einfache Ausgestaltung des drehelastischen Verbindungselements und/oder der Torsionsfeder lässt sich dadurch erreichen, dass der Schlitz in der Wandung der Hohlwelle über die gesamte Länge der Hohlwelle verläuft.

Zur Schaffung des drehelastischen Verbindungselements und/oder der erfindungsgemäßen Torsionsfeder ist vorgesehen, dass der Schlitz zumindest eine Breite von 0,1 mm aufweist. Entscheidend ist letztendlich, dass das Verbindungselement, also die Hohlwelle in diesem Falle, einen Schlitz in der Wand der Hohlwelle aufweist. Hierdurch ergeben sich besonders vorteilhaft ausreichend große Drehfederwege.

Um in einfacher Weise eine Schutzvorrichtung für das sich drehende Verbindungselement zu schaffen, ist vorgesehen, dass auf der Hohlwelle außerhalb des Vorratsbehälters ein rohrähnliches Schutzelement angeordnet ist.

Ein besonders vorteilhaft und einfach ausgestaltetes Schutzelement lässt sich dadurch schaffen, dass das rohrähnliche Schutzelement aus zumindest einem in Längsrichtung spiralförmig um die Hohlwelle geschlungenen drahtförmigen Element besteht.

Damit sich zwischen dem Verbindungselement und dem Schutzelement befindliche Schmutzpartikel wieder aus dem Zwischenraum zwischen Verbindungselement und dem Schutzelement herausfallen können, ist vorgesehen, dass zwischen den einzelnen Spiralwindungen ein Abstand von zumindest 2mm, vorzugsweise 6-20mm vorhanden ist.

Eine besonders vorteilhafte Ausgestaltung des Schutzelementes ergibt sich dadurch, dass die Form des Schutzelementes an die Form der Hohlwelle und daran angeschlossener sich drehender Elemente, die sich außerhalb des Vorratsbehälters befinden, angepasst ausgebildet ist.

Weitere Einzelheiten der Erfindung sind den übrigen Unteransprüchen, der Beispielbeschreibung und den Zeichnungen zu entnehmen. Hierbei zeigen:

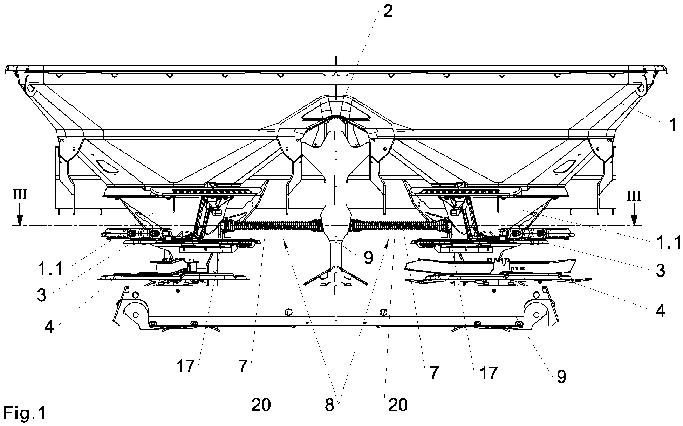

- Fig. 1: das Streugerät in Prinzipdarstellung und in der Ansicht von hinten,

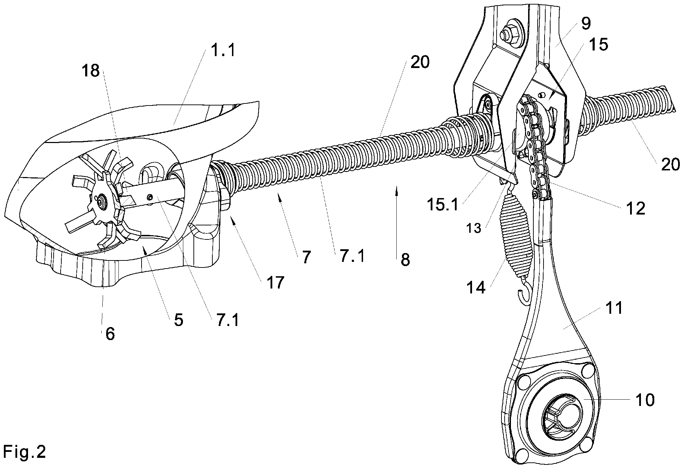

- Fig. 2: eine Rühreinrichtung mit Antriebseinheit in ausschnittsweiser Darstellung im vergrößertem Maßstab und perspektivischer Darstellung,

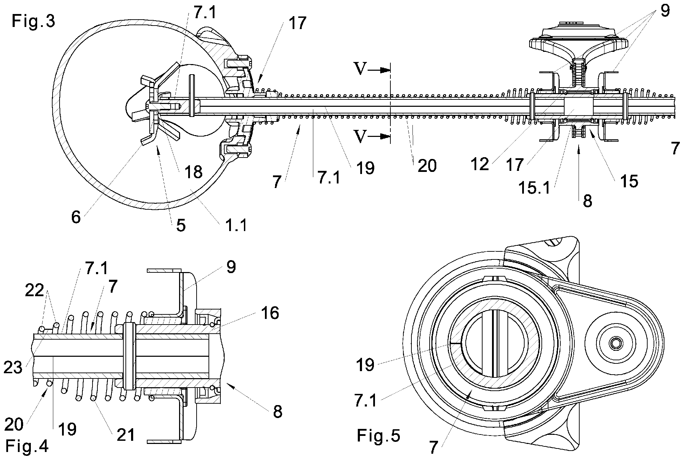

- Fig. 3: die Rühreinrichtung Schnittansicht III - III mit dem drehelastischen Verbindungselement,
- Fig. 4: den Befestigungsabschnitt der Antriebswelle und dem Verbindungselementes in der Ansicht gemäß Fig.3, jedoch ausschnittsweise und vergrößertem Maßstab und
- Fig. 5: die Rühreinrichtung in der Ansicht V - V.

Die als Streugerät ausgebildete Verteilmaschine ist als Zentrifugalstreuer ausgebildet. Der Vorratsbehälter 1 ist durch ein dachförmiges Mittelteil 2 in die beiden Trichterspitzen 1.1 aufgeteilt. Die unteren Enden der Trichterspitzen 1.1 sind jeweils eine Dosiereinrichtung 3 abgeschlossen. Die Dosiervorrichtung 3 führt das sich im Vorratsbehälter 1 befindliche und zu verteilende Streugut in einstellbaren Mengen den unterhalb der Dosiereinrichtung 3 angeordneten und mit zwei Wurfschaufeln besetzten Schleuderscheiben 4 zu. Des Weiteren ist im Bereich der Trichterspitzen 1.1 eine Rühreinrichtung 5 angeordnet.

Die Rührvorrichtung 5 weist das Rührorgan 6, das drehelastische Verbindungselement 7 und die Antriebsverbindung 8 auf und wird von einer nicht dargestellten motorischen Antriebsvorrichtung angetrieben.

Die Antriebswelle der Rühreinrichtung 5 ist an ihrem einen Ende mittels eines Lagers am Rahmen 9 des Streuers gelagert. An der Antriebswelle ist die Exzenterscheibe 10 drehfest angeordnet. An der Exzenterscheibe 10 ist eine Pleuelstange 11 angelenkt. An das dem Exzenter abgewandte Ende der Pleuelstange 11 ist eine Rollenkette 12 angeordnet, die umgelenkt über ein Zahnrad 13 über eine Zugfeder 13 am Rahmen 9 des Streuers befestigt ist. Das Zahnrad 13 ist drehfest mit dem Gehäuse 15.1 eines der Rührvorrichtung 5 zugeordneten Freilaufes 15 verbunden. Das Antriebselement des Freilaufes 15 ist drehfest mit der Rührwelle 8.1 der Rührvorrichtung 5 verbunden. Die durch die Rotation der Exzenterscheibe 10 erzeugte Hubbewegung der Pleuelstange 11, wird von der Rollenkette 12 auf das Zahnrad 13 übertragen. Die an der Rollenkette 12 angeordnete Zugfeder 14 hält die Rollenkette 12 auf dem Zahnrad 13 und dreht beim Rückhub des Pleuls 11 das Gehäuse 15.1 des Freilaufes 15 zurück. Das Zahnrad 13 ist über einen Freilauf 15 mit der Antriebswelle 16 verbunden. Die Antriebswelle ist am Rahmen 9 des Streuers angeordnet. Durch den Freilauf 15 wird eine Drehbewegung der Antriebswelle 16, durch die von der Exzenterscheibe 10 und der Pleuelstange 11 erzeugten hin- und hergehenden Hubbewegung und der erzeugten Hin- und Herdrehung des Gehäuses 15.1, in Drehung der Antriebswelle 16 für die Rühreinrichtung 5 in nur eine Drehrichtung erzeugt.

Die Antriebswelle 16 ist über dem als Hohlwelle 7.1 ausgebildeten drehelastischen Verbindungselement 7 mit dem Rührorgan 6 verbunden, welches in der Trichterspitze 1.1 angeordnet ist. Die Hohlwelle 7.1 ist an der Trichterspitze 1.1 mittels einer Lagerung 17 angeordnet und ragt in diese hinein. An dem freien, in die Trichterspitze 1.1 hineinragenden Ende 18 der Hohlwelle 7.1 ist das Rührorgan 6 unmittelbar angeordnet. Die Hohlwelle 7.1 weist einen über die gesamte Länge der Hohlwelle 7.1 verlaufenden Schlitz 19 in dessen Wandung auf. Der Schlitz 19 weist zumindest eine Breite von 0,1 mm auf. Die Hohlwelle 7.1 bildet die Torsionswelle.

Auf der Hohlwelle 7.1 ist außerhalb des Vorratsbehälters 1 ein rohrähnliches Schutzelement 20 angeordnet. Dieses rohrähnliche Schutzelement 20 besteht aus zumindest einem in Längsrichtung spiralförmig um die Hohlwelle 7.1 geschlungenen drahtförmigen Element 21. Zwischen den einzelnen Spiralwindungen 22 ist ein Abstand 23 von zumindest 2mm, vorzugsweise 6-20mm vorhanden. Die Form des Schutzelementes 20 ist an die Form der Hohlwelle 7.1 und daran angeschlossener sich drehender Elemente, die sich außerhalb des Vorratsbehälters 1 befinden, angepasst ausgebildet, wie die Zeichnungen zeigen. Das Schutzelement 20 dreht ist nicht drehfest mit der sich drehenden Hohlwelle 7.1 verbunden.

Wenn unzerdrückbare Gegenstände zwischen den Rührorganen 6 und den Wandungen des Vorratsbehälters 1 gelangen sollten, kommt es zum Blockieren der Rührvorrichtung 5. In diesem Fall kann sich das Verbindungselement 7 elastisch verdrehen. Damit die Streckgrenze des Verbindungselementes 7 nicht überschritten werden kann und es somit zu keinem Bruch des Verbindungselementes 7 kommt, darf der Verdrehwinkel des Verbindungselementes 7 zu dem Verdrehwinkel des nur in eine Richtung verdrehenden Freilaufs 15 größer- oder zumindest gleich groß sein.
Des Weiteren kann es so zu keiner Beschädigung an den Rühr- und/oder Dosiervorrichtung 3, 5, an der Antriebsvorrichtung oder beispielsweise menschlichen Körperteilen kommen.

## Patentansprüche

1. Streugerät mit Vorratsbehälter (1), einer vorzugsweise im unteren Bereich des Vorratsbehälters angeordneten Rührvorrichtung (5, 6), die sich vorzugsweise oberhalb einer Dosiereinrichtung (3) befindet, wobei die Rührvorrichtung (5, 6) eine Rührorgan (6) aufweist, welches mit einer Antriebsvorrichtung (15) über ein biegesteifes, drehelastisches und/oder als Torsionsfeder ausgebildetes Verbindungselement (7, 7.1) mit dem Rührorgan (6) verbunden ist, wobei das Verbindungselement (7, 7.1) in den Vorratsbehälter (1) hineinragt und an dem freien Ende (18) das Rührorgan (6) vorzugsweise unmittelbar angeordnet ist, **dadurch gekennzeichnet, dass** das Verbindungselement (7) als mit zumindest einem über zumindest mehr als über ihre halbe Länge verlaufenden Schlitz (19) in dessen Wandung versehene Hohlwelle (7.1) ausgebildet und unmittelbar mittels Lagerelementen (17) drehbar an einer Wand des Vorratsbehälters (1) angeordnet ist.

2. Streugerät nach Anspruch 1, **dadurch gekennzeichnet, dass** der Schlitz in der Wandung der Hohlwelle (7.1) über die gesamte Länge der Hohlwelle (7.1) verläuft.

3. Streugerät nach zumindest einem der vorstehenden Ansprüche, **dadurch gekennzeichnet, dass** der Schlitz (17) zumindest eine Breite von 0,1 mm aufweist.

4. Streugerät nach zumindest einem der vorstehenden Ansprüche, **dadurch gekennzeichnet, dass** auf der Hohlwelle (7.1) außerhalb des Vorratsbehälters (1) ein rohrähnliches Schutzelement (20) angeordnet ist.

5. Streugerät nach Anspruch 4, **dadurch gekennzeichnet, dass** das rohrähnliche Schutzelement aus zumindest einem in Längsrichtung spiralförmig um die Hohlwelle (7.1) geschlungenen drahtförmigen Element (21) besteht.

6. Streugerät nach Anspruch 4, **dadurch gekennzeichnet, dass** zwischen den einzelnen Spiralwindungen (21) ein Abstand von zumindest 2mm, vorzugsweise 6-20mm vorhanden ist.

7. Streugerät nach Anspruch 4, **dadurch gekennzeichnet, dass** die Form des Schutzelementes (20, 21) an die Form der Hohlwelle (7.1) und daran angeschlossener sich drehender Elemente, die sich außerhalb des Vorratsbehälters (1) befinden, angepasst ausgebildet ist.

## Claims

1. Spreader with a storage container (1), an agitating device (5, 6) which is preferably arranged in the lower region of the storage container and is preferably located above a metering means (3), wherein the agitating device (5, 6) has an agitating member (6) which is connected to a drive device (15) via a connecting element (7, 7.1) which is flexurally rigid, rotationally elastic and/or is designed as a torsion spring with the agitating member (6), wherein the connecting element (7, 7.1) projects into the storage container (1) and the agitating member (6) is preferably arranged directly at the free end (18), **characterized in that** the connecting element (7) is designed as a hollow shaft (7.1), the wall of which is provided with a slot (19) running over at least more than over half of its length, and is directly arranged rotatably on a wall of storage container (1) by means of bearing elements (17).

2. Spreader according to Claim 1, **characterized in that** the slot in the wall of the hollow shaft (7.1) runs over the entire length of the hollow shaft (7.1).

3. Spreader according to at least either of the preceding claims, **characterized in that** the slot (17) has at least a width of 0.1 mm.

4. Spreader according to at least one of the preceding claims, **characterized in that** a tube-like protective element (20) is arranged on the hollow shaft (7.1) outside the storage container (1).

5. Spreader according to Claim 4, **characterized in that** the tube-like protective element consists of at least one wire-shaped element (21) looped spirally around the hollow shaft (7.1) in the longitudinal direction.

6. Spreader according to Claim 4, **characterized in that** there is a spacing of at least 2 mm, preferably 6-20 mm, between the individual spiral turns (21).

7. Spreader according to Claim 4, **characterized in that** the shape of the protective element (20, 21) is designed in a manner matched to the shape of the hollow shaft (7.1) and of the rotating elements which are connected to the latter and are located outside the storage container (1).

## Revendications

1. Épandeur comprenant un réservoir (1), un dispositif agitateur (5, 6) disposé de préférence dans la région inférieure du réservoir, qui se trouve de préférence au-dessus d'un dispositif de dosage (3), le dispositif agitateur (5, 6) présentant un organe agitateur (6) qui est raccordé à un dispositif d'entraînement (15) par le biais d'un élément de liaison (7, 7.1) élastique en rotation, rigide en flexion, et/ou réalisé sous forme de ressort de torsion avec l'organe agitateur (6), l'élément de liaison (7, 7.1) pénétrant dans le réservoir (1) et l'organe agitateur (6) étant disposé de préférence directement à l'extrémité libre (18), **caractérisé en ce que** l'élément de liaison (7) est réalisé sous forme d'arbre creux (7.1) pourvu dans sa paroi d'au moins une fente (19) s'étendant sur au moins plus que la moitié de sa longueur et est disposé directement au niveau d'une paroi du réservoir (1) de manière à pouvoir tourner au moyen d'éléments de palier (17).

2. Épandeur selon la revendication 1, **caractérisé en ce que** la fente dans la paroi de l'arbre creux (7.1) s'étend sur toute la longueur de l'arbre creux (7.1).

3. Épandeur selon au moins l'une des revendications précédentes, **caractérisé en ce que** la fente (17) présente au moins une largeur de 0,1 mm.

4. Épandeur selon au moins l'une des revendications précédentes, **caractérisé en ce qu'**un élément de protection de type tubulaire (20) est disposé sur l'arbre creux (7.1) à l'extérieur du réservoir (1).

5. Épandeur selon la revendication 4, **caractérisé en ce que** l'élément de protection de type tubulaire se compose d'au moins un élément (21) en forme de fil enroulé en spirale dans la direction longitudinale autour de l'arbre creux (7.1).

6. Épandeur selon la revendication 4, **caractérisé en ce qu'**entre les enroulements individuels (21) de la spirale est prévu un espacement d'au moins 2 mm, de préférence de 6-20 mm.

7. Épandeur selon la revendication 4, **caractérisé en ce que** la forme de l'élément de protection (20, 21) est réalisée de manière adaptée à la forme de l'arbre creux (7.1) et aux éléments rotatifs raccordés à celui-ci, qui se trouvent à l'extérieur du réservoir (1).
